# EUROPEAN PATENT SPECIFICATION

(11) **EP 4 400 348 B1**
(45) Date of publication and mention of the grant of the patent: **14.05.2025**
(21) Application number: 23213290.2
(22) Date of filing: 30.11.2023
(51) Int. Cl.: B60K 6/46, B60L 15/20, B60W 30/18, B60W 50/10, B60W 10/08

(54) **CONTROL DEVICE OF VEHICLE**
STEUERUNGSVORRICHTUNG FÜR EIN FAHRZEUG
DISPOSITIF DE COMMANDE DE VÉHICULE

(30) Priority: 10.01.2023 JP 2023001756
(43) Date of publication of application: 17.07.2024
(73) Proprietor: Suzuki Motor Corporation, Hamamatsu-shi, Shizuoka 432-8611 (JP)
(72) Inventor: MORISHITA, Satoshi, Hamamatsu-shi, 432-8611 (JP)
(74) Representative: Haseltine Lake Kempner LLP

(56) References cited:
- WO-A1-2013/000042
- FR-A1- 3 014 805

## Description

### [Technical Field]

The present invention relates to a control device of a vehicle.

### [Background Art]

Patent Literature 1 discloses a system in which a vehicle acceleration is controlled using an one-pedal drive function with an accelerator pedal map to determine, based on a vehicle speed and an accelerator pedal position, either one of an acceleration, a deceleration, and a coasting.

In this system, when the accelerator pedal is detected to be completely released, the accelerator pedal map is changed into an adaptive accelerator pedal map which is configured to be corrected in response to a vehicle speed decrease during a vehicle deceleration.

Additionally, Patent Literature 1 discloses that when the accelerator pedal is detected to be depressed to re-accelerate the vehicle before the vehicle speed decreases to zero during the vehicle deceleration, the vehicle is controlled to be re-accelerated, without being further decelerated, in accordance with the corrected adaptive accelerator pedal map.

Additionally, Patent Literature 2 discloses an emergency accelerator braking system for a vehicle; the vehicle including and accelerator pedal and a separate brake pedal for control of the vehicle; the braking system reactive to position and movement of the accelerator pedal of the vehicle; the system characterized by transmission to a control module of control pedal behaviour data comprising at least one of force data representative of force applied by a driver to the accelerator pedal and position data representative of the relative position of the accelerator pedal, and wherein braking force is gradually increased and decreased by operation of the accelerator pedal over at least a portion of travel of the accelerator pedal; the system arranged to switch to an emergency braking mode on sensing rapid movement of the accelerator pedal above a predetermined threshold value in a decelerating direction.

Additionally, Patent Literature 3 discloses a method for controlling one or more traction chains of a motor vehicle as a function of the position of the accelerator pedal of the vehicle. The method includes the following step: controlling the traction chain(s) in a "freewheel" mode when the depression of the accelerator pedal is in a range between 5 % and 50%, preferably between 10% and 40%, of its maximum stroke.

### [Citation List]

### [Patent Literature]

[Patent Literature 1] JP 2022-84565 A
[Patent Literature 2] WO 2013/000042 A1
Patent Literature 3] FR 3 014 805 A1

### [Summary of Invention]

### [Technical Problem]

However, in the system described in Patent Literature 1, an acceleration range of the accelerator pedal position depends on a situation before the accelerator pedal is depressed and hence, a driving force and/or an acceleration degree of the vehicle may vary even if the accelerator pedal is depressed with the same angle. Due thereto, there is a possibility that a driver may feel uncomfortable.

Thus, an object of the present invention is to provide a control device of a vehicle with an one-pedal function, to allow, even when an accelerator pedal is depressed during a deceleration of the vehicle, the vehicle to transit to an acceleration state in accordance with a driver's acceleration intention without a driver's uncomfortable feeling.

### [Solution to Problem]

According to an aspect of the present invention, there is provided a control device of a vehicle, to accelerate/decelerate the vehicle based on an amount of an operation to one operation-pedal, the control device being configured to set in advance, as continuous areas to which the amount of the operation belongs, a deceleration area to consider the operation as a deceleration operation, an acceleration area to consider the operation as an acceleration operation, and a dead-band area to consider the operation as neither of the deceleration and acceleration operations, the amounts within the deceleration, dead-band, and acceleration areas being larger in this order, a deceleration degree becoming larger as the amount becomes smaller within the deceleration area, an acceleration degree becoming larger as the amount becomes larger within the acceleration area, the control device including a control unit, wherein if a change speed of the amount is defined to be positive/negative when the one operation-pedal is depressed/ returned, the control unit is configured to perform, when the change speed of the amount within the deceleration area is a predetermined speed of positive value or larger, a braking force suppression control of generating a smaller braking force than in a case of the change speed smaller than the predetermined speed.

### [Advantageous Effect of Invention]

According to the present invention, it is possible to allow, even when an accelerator pedal is depressed during a deceleration of a vehicle with an one-pedal function, the vehicle to transit to an acceleration state in accordance with a driver's acceleration intention without a driver's uncomfortable feeling.

### [Brief Description of Drawings]

Fig. 1 is a diagram of a vehicle mounted with a control device according to an embodiment of the present invention.
Fig. 2 is a setting example in the control device, showing a deceleration area, a dead-band area, and an acceleration area in accordance with an operation amount of an accelerator pedal.
Fig. 3 is a flow chart showing a procedure of an one-pedal control process to be performed in the control device.

### [Description of Embodiment]

A control device according to an embodiment of the present invention is mounted on a vehicle, to accelerate/decelerate the vehicle based on an amount of an operation to one operation-pedal, the control device being configured to set in advance, as continuous areas to which the amount of the operation belongs, a deceleration area to consider the operation as a deceleration operation, an acceleration area to consider the operation as an acceleration operation, and a dead-band area to consider the operation as neither of the deceleration and acceleration operations, the amounts within the deceleration, dead-band, and acceleration areas being larger in this order, a deceleration degree becoming larger as the amount becomes smaller within the deceleration area, an acceleration degree becoming larger as the amount becomes larger within the acceleration area, the control device including a control unit to perform, when a change speed of the amount within the deceleration area is a predetermined speed of positive value or larger, a braking force suppression control of generating a smaller braking force than in a case of the change speed smaller than the predetermined speed.

Accordingly, it is possible to allow, even when an accelerator pedal is depressed during a deceleration of a vehicle with an one-pedal function, the vehicle to transit to an acceleration state in accordance with a driver's acceleration intention without a driver's uncomfortable feeling.

### [Embodiment]

Hereinafter, referring to Figs., a control device of a vehicle according to an embodiment of the present invention will be described.

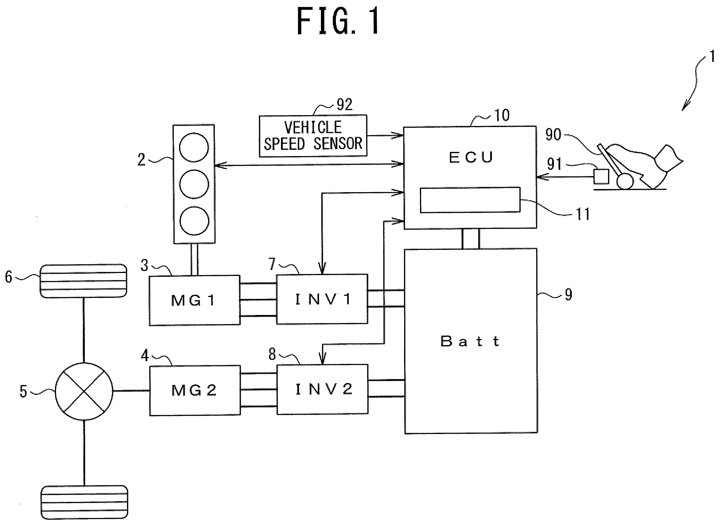

As shown in FIG. 1, a vehicle 1 mounted with a control device according to the embodiment includes an engine 2, a generation motor 3, a traction motor 4, a differential 5, driving wheels 6, an inverter 7 for the generation motor, an inverter 8 for the traction motor, battery 9, and an ECU 10 (Electronic Control Unit).

The engine 2 is formed with cylinders. In the present embodiment, the engine 2 is configured to perform, for each cylinder, a series of four steps of an intake step, a compression step, an expansion step and an exhaust step.

The generation motor 3 includes a rotation shaft connected to an output shaft of the engine 2. That is, the generation motor 3 is configured to generate an electric power with a driving force of the engine 2. The generation motor 3 supplies the battery 9 with the generated electric power.

The traction motor 4 includes a rotation shaft connected to the driving wheels 6 (left and right wheels) through the differential 5. That is, the traction motor 4 has a motor function of driving the driving wheels 6 with an electric power supplied from the battery 9 through the inverter 8 for the traction motor, and a generator function of generating an electric power with a reverse driving force inputted from the differential 5.

The inverter 7 for the generation motor is controlled by the ECU 10, to convert three-phase AC power generated by the generation motor 3 into DC power to thereby charge the battery 9 with the converted DC power.

The inverter 8 for the traction motor is controlled by the ECU 10, to convert DC power supplied from the battery 9 into three-phase AC power to thereby supply the traction motor 4 with the converted AC power. The inverter 8 for the traction motor is controlled by the ECU 10, to convert three-phase AC power generated by the traction motor 4 into DC power to thereby charge the battery 9 with the converted DC power.

The battery 9 is of a secondary battery such as a lithium-ion battery. The battery 9 is connected to both the generation motor 3 and the traction motor 4, which is configured to be charged with the generated electric power/regeneration power from the generation motor 3 or the traction motor 4.

The vehicle 1 also includes an accelerator pedal 90 (operation pedal) to be operated by a driver, without a brake pedal. An amount of an operation to the accelerator pedal 90, i.e., a depression amount of the accelerator pedal 90, is detected by a pedal angle sensor 91. The pedal angle sensor 91 is connected to the ECU 10, which is configured to detect as the operation amount an angle of the depressed accelerator pedal 90 with respect to the released accelerator pedal 90 (i.e., not-depressed accelerator pedal 90) with zero degree as a reference angle, and send a signal corresponding to the detected angle to the ECU 10.

The ECU 10 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the ECU 10, in addition to various constants and maps. That is, the CPU executes the program stored in the ROM using the RAM as an operation area, causing the computer unit to function as the ECU 10.

The input port of the ECU 10 is connected with, in addition to the pedal angle sensor 91, various sensors including a vehicle speed sensor 92.

The vehicle speed sensor 92 is configured to detect a speed of the vehicle 1.

The output port of the ECU 10 is connected with various control-targets such as the engine 2, the inverter 7 for the generation motor, and the inverter 8 for the traction motor as mentioned above.

In the present embodiment, the ECU 10 is configured to accelerate/decelerate the vehicle 1 based on the operation amount of the accelerator pedal 90.

As the operation amounts of the accelerator pedal 90, a deceleration area, a dead-band area, and an acceleration area are continuously set in advance, of which the operation amounts are larger in this order. That is, the operation amount within the deceleration area, the operation amount within dead-band area, and the operation amount within the acceleration area are larger in this order.

When the detected operation amount of the accelerator pedal 90 by the pedal angle sensor 91 belongs to the deceleration area, the ECU 10 considers the operation (depression) to the accelerator pedal 90 as a deceleration operation to thereby control the vehicle 1 so that a deceleration degree becomes larger as the operation amount becomes smaller.

Specifically, in this case, the ECU 10 controls the inverter 8 for the traction motor, so as to cause the traction motor 4 to output a braking force due to a strong regeneration. At this time, the ECU 10 enlarges the braking force due to the strong regeneration by the traction motor 4 (i.e., increases the deceleration degree) as the operation amount becomes smaller.

When the detected operation amount of the accelerator pedal 90 belongs to the acceleration area, the ECU 10 considers the operation to the accelerator pedal 90 as an acceleration operation to thereby control the vehicle 1 so that an acceleration degree becomes larger as the operation amount becomes larger.

When the detected operation amount belongs to the dead-band area, the ECU 10 considers the operation to the accelerator pedal 90 as neither of the deceleration operation and the acceleration operation.

As mentioned above, the ECU 10 is configured to detect, as the operation amount of the accelerator pedal 90, the angle of the depressed accelerator pedal 90 with respect to the released accelerator pedal 90 (of which an angle is zero degree as a reference angle), using the detection result from the pedal angle sensor 91. The operation amount of the accelerator pedal 90 becomes larger/smaller as the angle of the depressed accelerator pedal 90 larger/smaller. As an operation direction in which the accelerator pedal 90 is operated, there are positive direction in which the accelerator pedal 90 is depressed to increase the angle, and negative direction in which the accelerator pedal 90 is returned to decrease the angle.

The ECU 10 stores, in every predetermined unit time, the detection result from the pedal angle sensor 91 and detects a change speed which is a change amount per unit time of the operation amount of the accelerator pedal 90. The detected change speed is indicated with a positive/negative value when the accelerator pedal 90 is depressed/returned.

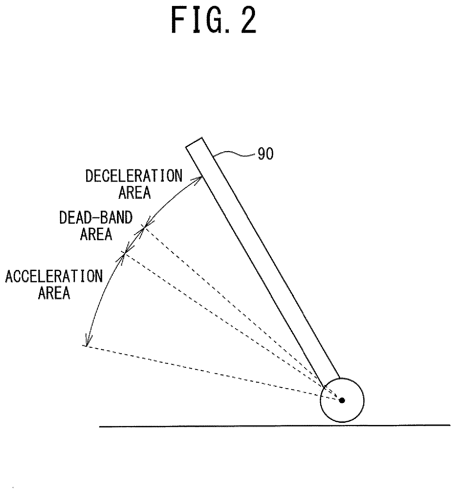

For example, the ECU 10 sets in advance the deceleration area, the dead-band area, and the acceleration area, as shown in FIG. 2. Then, the ECU 10 determines, in every unit time, either one of these areas to which the detected operation amount of the accelerator pedal 90 belongs, for example.

Specifically, the ECU 10 includes a control unit 11 to cause the traction motor 4 to generate a braking force due to the strong regeneration upon a determination that the detected operation amount of the accelerator pedal 90 belongs to the deceleration area. Then, if the change speed of the detected operation amount is not smaller than a predetermined speed of positive value, the ECU 10 performs a braking force suppression control of causing the traction motor 4 to generate a smaller braking force than in a case of the change speed smaller than the predetermined speed.

After starting the braking force suppression control, the control unit 11 continues, with the operation amount within the deceleration area, performing the braking force suppression control, as long as the change speed is of a positive value even when the change speed becomes smaller than the predetermined speed.

Thereafter, the control unit 11 terminates the continued braking force suppression control upon an elapse of a predetermined period of time.

On the other hand, even during the braking force suppression control, the control unit 11 terminates it upon detecting an increase of the vehicle speed.

Additionally, even during the braking force suppression control, the control unit 11 terminates it upon determining, with the detected operation amount belonging to the deceleration area, the change speed thereof to be of a negative value.

Preferably, the braking force may be gradually changed when the braking force suppression control is started, in order to prevent the deceleration degree from drastically changing.

Similarly, preferably the braking force may be gradually changed when a normal brake control is started after the braking force suppression control is terminated, in order to prevent the deceleration degree from drastically changing.

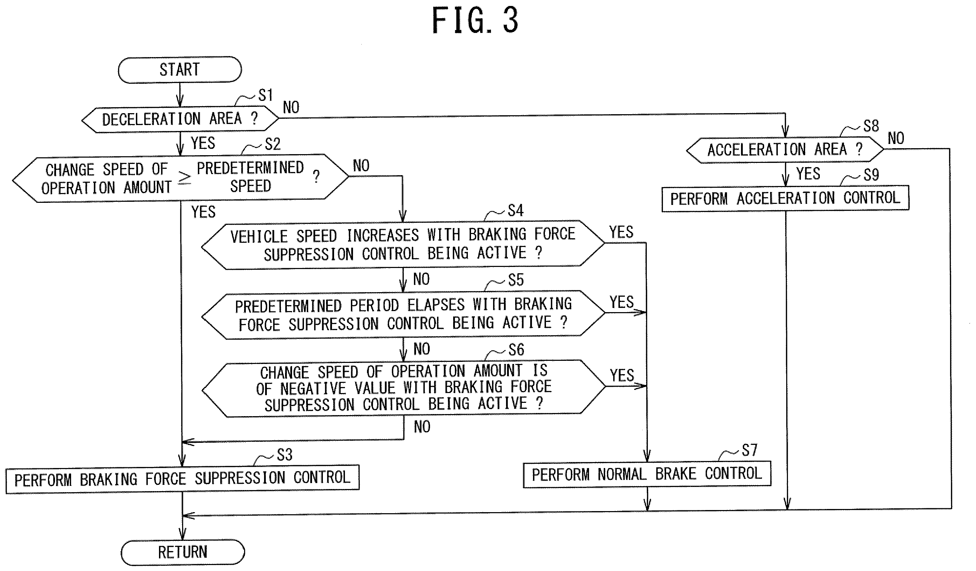

Next, referring to FIG. 3, an one-pedal control process to be performed in the control device according to the present embodiment will be explained. Note that this process is started upon activating the ECU 10, which is repeated at a predetermined interval.

At step S1, the ECU 10 determines whether the operation amount of the accelerator pedal 90 belongs to the deceleration area.

If determines that the operation amount belongs to the deceleration area ("YES" at step S1), the ECU 10 proceeds to step S2.

If determines that the operation amount does not belong to the deceleration area ("NO" at step S1), the ECU 10 proceeds to step S8.

At step S2, the ECU 10 determines whether or not the change speed of the operation amount of the accelerator pedal 90 is the predetermined speed or larger.

If determines that the change speed of the operation amount is the predetermined speed or larger ("YES" at step S2), the ECU 10 proceeds to step S3. If determines that the change speed of the operation amount is not the predetermined speed or larger ("NO" at step S2), the ECU 10 proceeds to step S4.

At step S3, the ECU 10 performs (starts/maintains) the braking force suppression control. After performing the process at step S3, the ECU terminates this one-pedal control process to repeat it.

At step S4, the ECU 10 determines whether the vehicle speed increases with the braking force suppression control being active.

If determines that the vehicle speed increases with the braking force suppression control being active ("YES" at step S4), the ECU 10 proceeds to step S7. If determines that the vehicle speed does not increase with the braking force suppression control being active ("NO" at step S4), the ECU 10 proceeds to step S5.

At step S5, the ECU 10 determines whether the predetermined period of time elapses with the braking force suppression control being active. Specifically, the ECU 10 determines whether the predetermined period of time elapses from start of the latest braking force suppression control. Note that for example, at a deceleration before the braking force suppression control is initially performed after the vehicle 1 is powered on, such a period of time is considered to elapse at step S5 ("YES" at step S5).

If determines that the predetermined period of time elapses with the braking force suppression control being active ("YES" at step S5), the ECU 10 proceeds to step S7. If determines that the predetermined period of time does not elapse with the braking force suppression control being active ("NO" at step S5), the ECU 10 proceeds to step S6.

At step S6, the ECU 10 determines whether the change speed of the operation amount of the accelerator pedal 90 is of a negative value with the braking force suppression control being active.

If determines that the change speed of the operation amount of the accelerator pedal 90 is of the negative value with the braking force suppression control being active ("YES" at step S6), the ECU 10 proceeds to step S7. If determines that the change speed of the operation amount of the accelerator pedal 90 is not of the negative value with the braking force suppression control being active ("NO" at step S6), the ECU 10 proceeds to step S3 to maintain the braking force suppression control to be active.

At step S7, the ECU 10 performs a normal brake control. After step S7, the ECU 10 terminates this one-pedal control process to repeat it.

At step S8, the ECU 10 determines whether the operation amount of the accelerator pedal 90 belongs to the acceleration area.

If determines that the operation amount of the accelerator pedal 90 belongs to the acceleration area ("YES" at step S8), the ECU 10 proceeds to step S9. If determines that the operation amount does not belong to the acceleration area ("NO" at step S8), the ECU 10 terminates this one-pedal control process to repeat it.

At step S9, the ECU 10 performs an acceleration control. After step S9, the ECU 10 terminates this one-pedal control process to repeat it.

Thus, in the present embodiment, when the change speed (change amount per unit time), at which the operation amount of the accelerator pedal 90 within the deceleration area changes, is the predetermined speed of the positive value or larger, the control unit 11 performs the braking force suppression control of causing the traction motor 4 to generate a smaller braking force due to the strong regeneration than in a case of a change speed smaller than the predetermined speed.

In a case where the accelerator pedal 90 within the deceleration area is relatively-quickly depressed, even if the depressed accelerator pedal 90 still belongs to the deceleration area, there appears to be the driver's acceleration intention. Hence, when the change speed of the operation amount of the accelerator pedal 90 is the predetermined speed or larger, the control unit 11 suppresses the braking force due to the strong regeneration, thereby allowing the vehicle 1 to transit to an acceleration state in accordance with the driver's acceleration intention without the driver's uncomfortable feeling.

Additionally, even if the change speed of the accelerator pedal 90 within the deceleration area drops below the predetermined speed after the braking force suppression control is started, the control unit 11 continues to perform the braking force suppression control under a predetermined condition, as long as the change speed is of a positive value.

Thus, for example, even if the driver slows down the depression speed of the accelerator pedal 90, as long as the accelerator pedal 90 is in middle of depression (the change speed is larger than zero), the braking force suppression control can be maintained, properly reflecting the driver's acceleration intention to the vehicle travel.

According thereto, it is also possible to prevent the deceleration degree from frequently changing.

This is because, in a case where the driver depresses, with the driver's acceleration intention, the accelerator pedal 90 from the deceleration area toward the acceleration area, when the operation amount of the accelerator pedal 90 closes to the acceleration area (or dead-band area), the driver may slow down the depression speed (change speed of the operation amount) of the accelerator pedal 90 so as to prevent the acceleration degree within the acceleration area from becoming too large. Hence, even if the driver slows down the depression speed (change speed of the operation amount) of the accelerator pedal 90 when the operation amount of the accelerator pedal 90 closes to the acceleration area (or dead-band area), the braking force suppression control can be maintained, allowing the vehicle 1 to transit to an acceleration state in accordance with the driver's acceleration intention without the driver's uncomfortable feeling.

Additionally, the control unit 11 terminates the braking force suppression control upon an elapse of the predetermined period of time after the braking force suppression control is started.

In a case where the accelerator pedal 90 is not depressed into the acceleration area even upon an elapse of the predetermined period of time after the accelerator pedal 90 is relatively-quickly depressed within the deceleration area, the driver may intend to cancel the acceleration. Thus, in such a case, the braking force set is restored to normal one (i.e., the normal brake control is performed instead of the braking force suppression control).

Additionally, the control unit 11 immediately terminates the braking force suppression control, when detecting an increase of the vehicle speed while the braking force suppression control is active.

For example, while the vehicle 1 travels on a down slope, if the vehicle speed increases with the braking force suppression control being active, the braking force set is restored, even during the braking force suppression control, to a normal one.

This is because, when the vehicle speed during the braking force suppression control (i.e., the vehicle speed when the accelerator pedal 90 is depressed within the deceleration area at the predetermined speed or larger to thereby perform the braking force suppression control) becomes higher than that upon a depression start for the accelerator pedal 90 from the deceleration area toward the acceleration area (e.g., the vehicle speed immediately before the braking force suppression control is started), it is assumed that the driver's acceleration intention is satisfied. Thus, in this case, it is preferable that the braking force set corresponding to a normal travel is adopted.

That is, in such a case, the braking force suppression control is terminated to restore the braking force set to a normal braking force set, allowing the driver to perform a normal deceleration operation (i.e., normally perform a deceleration operation in such a vehicle with an one-pedal function).

Even during the braking force suppression control, the control unit 11 forcibly terminates the braking force suppression control upon determining the change speed of the operation amount of the accelerator pedal 90 within the deceleration area to be negative.

Specifically, after the braking force suppression control is started, if the change speed of the operation amount of the accelerator pedal 90 within the deceleration area is determined to be of negative value, the braking force suppression control is terminated to restore the braking force set to a normal one.

The change speed of negative value within the deceleration area means that the accelerator pedal 90 within the deceleration area is once depressed toward the acceleration area and thereafter, is released upwardly (i.e., is returned in a pedal-off direction). **In** this case, the driver can be considered to cancel the acceleration for the vehicle 1, thereby restoring the braking force set to a normal one.

Note that in the present embodiment, the vehicle 1 is of series hybrid. Alternatively, an electric vehicle with a motor as a driving source, where acceleration and deceleration are respectively controlled based on an amount of an operation to one operation-pedal, may be adopted.

In the present embodiment, the ECU 10 performs various determinations and calculations based on information from various sensors, but being not limited to this. The vehicle 1 may include a communication unit communicable with an external device such as a server to perform them based on the information of various sensors sent from the communication unit, in which the communication unit may receive the determination and calculation results from the external device and various controls may be performed using the received determination and calculation results.

### [Reference Signs List]

1: vehicle
4: traction motor
8: inverter for traction motor
10: ECU
11: control unit
90: accelerator pedal (operation pedal)
91: pedal angle sensor
92: vehicle speed sensor

## Claims

1. A control device of a vehicle (1), to accelerate/decelerate the vehicle based on an amount of an operation to one operation-pedal (90),
the control device being configured to set in advance, as continuous areas to which the amount of the operation belongs, a deceleration area to consider the operation as a deceleration operation, an acceleration area to consider the operation as an acceleration operation, and a dead-band area to consider the operation as neither of the deceleration and acceleration operations, the amounts within the deceleration, dead-band, and acceleration areas being larger in this order, a deceleration degree becoming larger as the amount becomes smaller within the deceleration area, an acceleration degree becoming larger as the amount becomes larger within the acceleration area,
**characterized by**:
a control unit (11), wherein
if a change speed of the amount is defined to be positive/negative when the one operation-pedal (90) is depressed/returned, the control unit (11) is configured to perform, when the change speed of the amount within the deceleration area is a predetermined speed of positive value or larger, a braking force suppression control of generating a smaller braking force than in a case of the change speed smaller than the predetermined speed.

2. The control device as claimed in claim 1, wherein
even if the change speed of the amount within the deceleration area drops below the predetermined speed after the braking force suppression control is started, the control unit maintains the braking force suppression control as long as the change speed is positive.

3. The control device as claimed in claim 1, wherein
the control unit terminates the braking force suppression control, upon an elapse of a predetermined period of time after the braking force suppression control is started.

4. The control device as claimed in claim 1, wherein
the control unit terminates the braking force suppression control, upon detecting a speed of the vehicle to increase after the braking force suppression control is started.

5. The control device as claimed in claim 1, wherein
the control unit terminates the braking force suppression control, upon determining the change speed to be negative after the braking force suppression control is started.

## Patentansprüche

1. Steuerungsvorrichtung für ein Fahrzeug (1), um das Fahrzeug auf Grundlage eines Ausmaßes eines Vorgangs an einem Betätigungspedal (90) zu beschleunigen/verlangsamen,
wobei die Steuerungsvorrichtung dazu konfiguriert ist, einen Verlangsamungsbereich, um den Vorgang als einen Verlangsamungsvorgang zu betrachten, einen Beschleunigungsbereich, um den Vorgang als einen Beschleunigungsvorgang zu betrachten, und einen Unempfindlichkeitsbereich, um den Vorgang weder als den Verlangsamungs- noch den Beschleunigungsvorgang zu betrachten, im Voraus als durchgängige Bereiche, zu denen das Ausmaß des Vorgangs gehört, festzulegen, wobei das Ausmaß innerhalb des Verlangsamungs-, Unempfindlichkeits- und Beschleunigungsbereichs in dieser Reihenfolge größer ist, wobei ein Verlangsamungsgrad größer wird, wenn das Ausmaß innerhalb des Verlangsamungsbereichs kleiner wird, wobei ein Beschleunigungsgrad größer wird, wenn das Ausmaß innerhalb des Beschleunigungsbereichs größer wird,
**gekennzeichnet durch**:
eine Steuerungseinheit (11), wobei
die Steuerungseinheit (11), wenn eine Änderungsgeschwindigkeit des Ausmaßes als positiv/negativ definiert ist, wenn das eine Betätigungspedal (90) gedrückt/zurückgeführt wird, dazu konfiguriert ist, eine Bremskraftunterdrückungssteuerung durchzuführen, wenn die Änderungsgeschwindigkeit des Ausmaßes innerhalb des Verlangsamungsbereichs eine vorbestimmte Geschwindigkeit mit positivem Wert oder größer ist, um eine kleinere Bremskraft als im Falle einer Änderungsgeschwindigkeit, die kleiner als die vorbestimmte Geschwindigkeit ist, zu erzeugen.

2. Steuerungsvorrichtung nach Anspruch 1, wobei die Steuerungseinheit, auch wenn die Änderungsgeschwindigkeit des Ausmaßes innerhalb des Verlangsamungsbereichs nach dem Starten der Bremskraftunterdrückungssteuerung unter die vorbestimmte Geschwindigkeit abfällt, die Bremskraftunterdrückungssteuerung so lange beibehält, wie die Änderungsgeschwindigkeit positiv ist.

3. Steuerungsvorrichtung nach Anspruch 1, wobei die Steuerungseinheit die Bremskraftunterdrückungssteuerung nach Ablauf einer vorbestimmten Zeitspanne nach dem Starten der Bremskraftunterdrückungssteuerung beendet.

4. Steuerungsvorrichtung nach Anspruch 1, wobei die Steuerungseinheit die Bremskraftunterdrückungssteuerung beendet, wenn erfasst wird, dass eine Geschwindigkeit des Fahrzeugs nach dem Starten der Bremskraftunterdrückungssteuerung zunimmt.

5. Steuerungsvorrichtung nach Anspruch 1, wobei die Steuerungseinheit die Bremskraftunterdrückungssteuerung beendet, wenn bestimmt wird, dass die Änderungsgeschwindigkeit nach dem Starten der Bremskraftunterdrückungssteuerung negativ ist.

## Revendications

1. Un dispositif de commande d'un véhicule (1), pour accélérer/décélérer le véhicule en fonction de la quantité d'une opération sur une pédale d'opération (90),
le dispositif de commande étant configuré pour définir à l'avance, comme zones continues auxquelles appartient la quantité de l'opération, une zone de décélération pour considérer l'opération comme une opération de décélération, une zone d'accélération pour considérer l'opération comme une opération d'accélération, et une zone de bande morte pour considérer l'opération comme aucune des opérations de décélération et d'accélération, les quantités dans les zones de décélération, de bande morte et d'accélération étant plus grandes dans cet ordre, un degré de décélération devenant plus grand à mesure que la quantité devient plus petite dans la zone de décélération, un degré d'accélération devenant plus grand à mesure que la quantité devient plus grande dans la zone d'accélération,
**caractérisée par** :
une unité de commande (11), dans laquelle
si une vitesse de changement de la quantité est définie comme étant positive/négative lorsque la pédale de commande (90) est enfoncée/retournée, l'unité de commande (11) est configurée pour effectuer, lorsque la vitesse de changement de la quantité dans la zone de décélération est une vitesse prédéterminée de valeur positive ou supérieure, une commande de suppression de force de freinage consistant à générer une force de freinage inférieure que dans un cas de vitesse de changement inférieure à la vitesse prédéterminée.

2. Dispositif de commande selon la revendication 1, dans lequel
même si la vitesse de changement de la quantité dans la zone de décélération tombe en dessous de la vitesse prédéterminée après le démarrage de la commande de suppression de la force de freinage, l'unité de commande maintient la commande de suppression de la force de freinage tant que la vitesse de changement est positive.

3. Dispositif de commande selon la revendication 1, dans lequel
l'unité de commande met fin à la commande de suppression de la force de freinage, après l'écoulement d'une période de temps prédéterminée après le démarrage de la commande de suppression de la force de freinage.

4. Dispositif de commande selon la revendication 1, dans lequel
l'unité de commande met fin à la commande de suppression de la force de freinage, lorsqu'elle détecte une augmentation de la vitesse du véhicule après le démarrage de la commande de suppression de la force de freinage.

5. Dispositif de commande selon la revendication 1, dans lequel
l'unité de commande met fin à la commande de suppression de la force de freinage, après avoir déterminé que la vitesse de changement est négative après le démarrage de la commande de suppression de la force de freinage.
